# FASCICULE DE BREVET EUROPEEN

(11) **EP 3 418 046 B1**
(45) Date de publication et mention de la délivrance du brevet: **12.06.2019**
(21) Numéro de dépôt: 18171377.7
(22) Date de dépôt: 09.05.2018
(51) Int. Cl.: B32B 3/14, B32B 5/02, B32B 5/26, B32B 7/04, B32B 3/18, F02K 9/00

(54) **BANDE MULTICOUCHE POUR LA FABRICATION DE PIÈCES EN MATÉRIAU COMPOSITE ET SON PROCÉDÉ D'OBTENTION**
MEHRSCHICHTBAND FÜR DIE HERSTELLUNG VON TEILEN AUS VERBUNDMATERIAL, UND SEIN HERSTELLUNGSVERFAHREN
MULTILAYER STRIP FOR MANUFACTURING PARTS IN COMPOSITE MATERIAL AND METHOD FOR OBTAINING SAME

(30) Priorité: 20.06.2017 FR 1755589
(43) Date de publication de la demande: 26.12.2018
(73) Titulaire: ArianeGroup SAS, 75015 Paris (FR)
(72) Inventeur: PAGES-XATART, Guillaume, 33320 Le Taillan Medoc (FR); PRAUD, Thierry, 33127 Martignas sur Jalle (FR); DESEUR, Simon, 64100 Bayonne (FR)
(74) Mandataire: Cabinet Beau de Loménie

(56) Documents cités:
- DE-A1-102013 105 080
- FR-A1- 2 962 933

## Description

### Arrière-plan de l'invention

La présente invention se rapporte au domaine général des procédés de fabrication de pièces en matériau composite mettant en oeuvre notamment le bobinage de bandes de tissu pré imprégnées. Elle concerne notamment une bande multicouche destinée à être utilisée dans un tel procédé.

Dans de tels procédés, un opérateur doit généralement alimenter manuellement un dispositif muni d'un galet presseur et d'un mandrin sur lequel seront bobinées des segments de bande de tissu pré imprégnés de résine. Le dispositif comprend généralement une zone destinée à chauffer les segments pour permettre leur déformation et leur adhésion entre eux, et une zone destinée à refroidir les segments une fois bobinés. Lorsque l'on souhaite bobiner sur un mandrin de forme tronconique, l'opérateur doit préparer des segments présentant des fibres orientées dans une direction transverse à la direction longitudinale du segment, puis déformer le segment manuellement par traction entre deux de ses bords opposés avant de pouvoir le bobiner. Les segments unitaires doivent ainsi être chargés un par un à l'intérieur du dispositif entre le galet presseur et le mandrin par l'opérateur.

Les opérations décrites ci-avant sont manuelles, longues, et leur répétabilité dépend fortement de l'opérateur. En outre, il est possible que des segments soient mal positionnés, par exemple qu'ils se chevauchent ou soient trop espacés, lors de l'alimentation du dispositif, ce qui altère la qualité de la pièce fabriquée en dimensions et en tenue mécanique. Enfin, ces opérations présentent des risques de sécurité lorsque l'opérateur s'approche du galet presseur et du mandrin en rotation.

Le document FR2962933 divulgue un matériau intermédiaire de renfort constitué d'un ensemble de rubans de fibres unidirectionnelles pour la réalisation de pièces composites. Le document DE102013105080 divulgue un matériau composite thermoplastique renforcé par un renfort fibreux, dans lequel des segments de plis organiques à fibres de renfort sont joints pour former un stratifié à deux couches.

Il existe donc un besoin pour améliorer de tels procédés de fabrication et en augmenter leur sécurité.

### Objet et résumé de l'invention

La présente invention a donc pour but principal de pallier de tels inconvénients en proposant, selon un premier aspect, une bande multicouche destinée à être utilisée pour fabriquer une pièce en matériau composite, la bande multicouche comprenant une pluralité de segments de bande de tissu bidimensionnel imprégnés de résine, chaque segment comprenant deux pluralités de fils s'étendant perpendiculairement l'une par rapport à l'autre, les fils de chaque pluralité de fils s'étendant dans une direction faisant un angle non nul avec une direction longitudinale de chaque segment,
la bande multicouche étant formée d'un empilement d'au moins une première et une deuxième couches, chaque couche comprenant une pluralité de segments consécutifs dont les bords transversaux sont adjacents les uns avec les autres, chaque segment d'une couche chevauchant au moins deux bords transversaux adjacents de deux segments consécutifs de l'autre couche.

On désigne par « bord transversal » un bord qui s'étend dans une direction transversale du segment, c'est-à-dire une direction transverse par rapport à la direction longitudinale. Les bords transversaux sont ainsi opposés selon la direction longitudinale.

La bande multicouche selon l'invention peut être utilisée pour fabriquer par bobinage des pièces de révolution présentant une portion tronconique, c'est-à-dire une pièce de révolution comportant une portion formant un angle non nul avec l'axe de révolution de la pièce. En effet, pour bobiner sur un mandrin de forme tronconique, il est nécessaire de déformer les bandes avant le bobinage de celles-ci pour qu'elles puissent épouser la forme du mandrin. Les bandes de tissu pré imprégnées doivent alors présenter des fibres orientées dans une direction qui n'est pas à 0° ou 90° avec une direction longitudinale de la bande, pour pouvoir être déformées. La déformation peut consister par exemple en une traction sur des coins ou des bords de la bande opposés longitudinalement.

La bande multicouche selon l'invention permet de réaliser un bobinage continu et de réduire les opérations manuelles lorsque l'on fabrique une pièce en matériau composite par bobinage de cette bande sur une surface ayant la forme de la pièce à fabriquer. La sécurité de l'opérateur et la répétabilité des opérations sont ainsi améliorées. En outre, la bande selon l'invention comprend une pluralité de couches, ce qui permet d'augmenter la vitesse avec laquelle on fabrique la pièce puisqu'on bobine finalement plusieurs couches de tissu pré imprégné en même temps.

Dans un exemple de réalisation, les fils de chaque pluralité de fils peuvent s'étendre dans une direction faisant un angle de 45° avec la direction longitudinale de chaque segment. Cette disposition est préférée pour obtenir une déformation maximale des bandes lorsqu'on réalise une traction sur deux bords opposés de la bande. Une telle disposition peut être avantageuse lorsque l'on souhaite bobiner des pièces de forme tronconique dont la surface forme un angle non nul avec leur axe de révolution (on parle aussi d'« angle de cône »).

Dans un exemple de réalisation, chaque bord transversal d'un segment peut présenter une forme en biseau par rapport à la direction longitudinale. On peut par exemple obtenir de telles formes lorsque les segments sont réalisés par découpage dans un pli de pré imprégné.

L'invention vise aussi, selon un deuxième aspect, un procédé de fabrication d'une bande multicouche destinée à être utilisée pour fabriquer une pièce en matériau composite, le procédé comprenant les étapes suivantes :
- l'obtention d'une pluralité de segments de bande de tissu bidimensionnel imprégnés de résine, chaque segment comprenant deux pluralités de fils s'étendant perpendiculairement l'une par rapport à l'autre, les fils de chaque pluralité de fils s'étendant dans une direction faisant un angle non nul avec une direction longitudinale de chaque segment,
- l'empilement d'au moins une première et une deuxième couches, chaque couche comprenant une pluralité de segments consécutifs dont les bords transversaux sont adjacents les uns avec les autres, chaque segment d'une couche chevauchant au moins deux bords transversaux adjacents de deux segments consécutifs de l'autre couche,
- le chauffage de l'empilement des première et deuxième couches à une température au moins égale à la température de ramollissement de la résine présente dans les segments,
- le compactage de l'empilement des première et deuxième couches chauffées de manière à les faire adhérer l'une avec l'autre, et
- le refroidissement de l'empilement ainsi obtenu de manière à obtenir la bande multicouche cohérente.

La température de ramollissement de la résine correspond à la température à laquelle elle commence à devenir suffisamment fluide, par exemple pâteuse ou liquide, pour assurer une cohésion entre les deux couches au moment du compactage. La température de ramollissement est toutefois inférieure à la température à laquelle la résine commence à polymériser. Après refroidissement, la bande multicouche cohérente peut être manipulée facilement.

Dans un exemple de réalisation, les étapes de chauffage et de compactage de l'empilement peuvent être réalisées simultanément dans une presse chauffante. En variante, elles peuvent être réalisées dans des dispositifs différents.

Dans un exemple de réalisation, le procédé peut comprendre en outre, après l'étape de refroidissement de l'empilement, une étape durant laquelle on enroule la bande multicouche sur un rouleau afin de la stocker. Selon le type de résine utilisé, on peut l'enrouler directement, c'est-à-dire sans avoir recours à un film séparateur entre deux couches de bande successives sur le rouleau, ou en utilisant un film séparateur entre deux couches de bande successives sur le rouleau.

Dans un exemple de réalisation, les segments de la première couche peuvent être déposés sur un convoyeur par un premier dispositif de chargement, et les segments de la deuxième couche peuvent être empilés sur ceux de la première couche par un deuxième dispositif de chargement décalé par rapport au premier dispositif de chargement le long du convoyeur. Les chargeurs peuvent en variante être disposés de part et d'autre du convoyeur. Dans un autre exemple de réalisation, un robot assure le placement des segments de la première et de la deuxième couche sur le convoyeur.

Dans un exemple de réalisation, un segment de bande de tissu bidimensionnel imprégné de résine peut être obtenu par découpage d'un pli de pré imprégné.

L'invention vise enfin, selon un troisième aspect, un procédé de fabrication d'une pièce en matériau composite présentant une forme de révolution comportant au moins une portion formant un angle non nul avec l'axe de révolution de la pièce, le procédé comprenant au moins une étape de bobinage d'une bande multicouche telle que celle présentée ci-avant sur une surface ayant la forme de la pièce à fabriquer.

En particulier, on peut fabriquer une pièce de moteur-fusée telle qu'un divergent de moteur-fusée.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1A est une vue en perspective d'une bande selon un mode de réalisation de l'invention,
- la figure 1B est une vue agrandie au niveau d'un segment de la bande de la figure 1A,
- la figure 2 à 7 illustrent des étapes d'un procédé de fabrication d'une bande multicouche selon un mode de réalisation de l'invention, et
- la figure 8 montre un exemple de bobinage d'une bande multicouche selon l'invention pour fabriquer une pièce de révolution en matériau composite.

### Description détaillée de l'invention

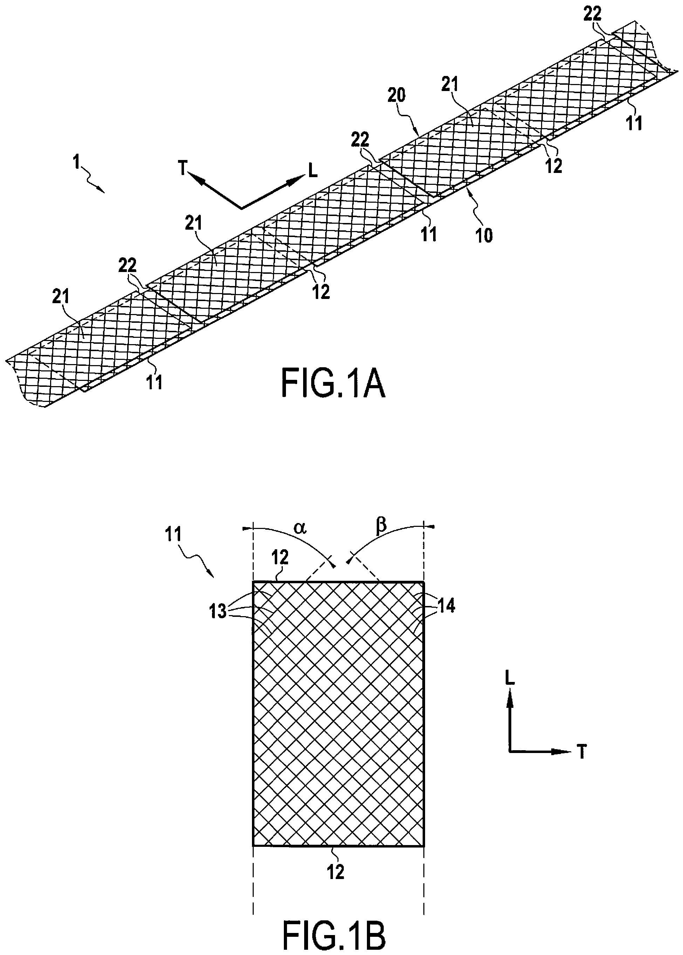

La figure 1 montre une bande multicouche 1 selon un mode de réalisation de l'invention. Comme il sera détaillé plus loin, cette bande 1 pourra être utilisée pour fabriquer une pièce en matériau composite.

La bande 1 comprend une première couche 10 et une deuxième couche 20, la deuxième couche 20 étant empilée sur la première couche 10. La première couche 10 comprend une pluralité de segments 11 de bande de tissu bidimensionnel imprégnés de résine. La deuxième couche comprend une pluralité de segments 21 de bande de tissu bidimensionnel imprégnés de résine. La résine peut être ici une résine destinée à former la matrice. Les segments 11 et 21 peuvent être constitués du même matériau. Chaque segment d'une même couche peut présenter une forme identique. Chaque segment 11 et 21 présente ici une plus grande dimension dans la direction longitudinale L, correspondant ici à la direction selon laquelle s'étend la bande 1, et une plus petite dimension dans la direction transversale T à la bande 1. A titre d'exemple, un segment 11, 21 peut présenter une largeur comprise entre 25 cm et 75 cm et une longueur comprise entre 100 cm et 200 cm. En variante, les segments 11, 21 peuvent avoir des formes différentes de celle illustrée sur les figures 1A et 1B, notamment carrée ou en forme de parallélogramme. On notera que les bords (longitudinaux ou transversaux) de chaque segment 11, 21 peuvent ne pas être rectilignes, mais par exemple former une ligne brisée ou une ligne courbe.

Au sein de la première couche 10, les segments 11 sont disposés consécutivement. Chaque segment 11 comprend deux bords transversaux 12 opposés selon la direction longitudinale L. Les bords transversaux 12 s'étendent ainsi selon la largeur du segment 11. Au sein de la première couche 10, le bord transversal 12 d'un segment 11 est adjacent à un bord transversal 12 d'un segment 11 qui lui est adjacent. De façon similaire, au sein de la deuxième couche 20, les segments 21 sont également disposés consécutivement et comprennent des bords transversaux 22 qui sont adjacents les uns avec les autres. On peut veiller à ce que les bords transversaux 12, 22 de deux segments 11, 21 consécutifs soient suffisamment proches les uns des autres sans nécessairement se toucher. On veillera toutefois à ce que deux segments consécutifs d'une même couche ne se chevauchent pas. Selon l'invention, chaque segment 11, 21 d'une couche 10, 20 chevauche au moins deux bords transversaux 12, 22 adjacents de deux segments 11, 21 consécutifs de l'autre couche 10, 20. Les segments 11, 21 de chaque couche 10, 20 sont ainsi disposés en quinconce entre les deux couches 10, 20. Dans l'exemple illustré, les bords longitudinaux des segments consécutifs sont alignés.

La bande 1 multicouche se présente d'un seul tenant. En particulier, il y a continuité de matière entre les couches 10, 20 qui la constituent de façon à ce qu'elle se comporte comme une bande monocouche. En d'autres termes, il y a cohésion entre les couches 10, 20 de la bande multicouche, notamment continuité de la résine précurseur de matrice entre elles.

La figure 1B est une vue détaillée de la figure 1A au niveau d'un segment 11. Le segment 11 est une bande de tissu bidimensionnel imprégné de résine qui comprend deux pluralités de fils 13 et 14 tissées entre elles s'étendant perpendiculairement l'une par rapport à l'autre. Les deux pluralités de fils 13 et 14 correspondent de façon connue aux fils de trame et aux fils de chaîne. Selon l'invention, les fils de la première pluralité de fils 13 s'étendent dans une direction faisant un angle α non nul avec la direction longitudinale L de la bande 1. De même, les fils de la deuxième pluralité de fils 14 s'étendent dans une direction faisant un angle β non nul avec la direction longitudinale L. Dans l'exemple illustré, les angles α et β sont tous les deux égaux à 45°. Une telle orientation des pluralités de fils 13 et 14 permet de rendre le segment 11 déformable par traction sur ses bords transversaux 12, ce qui confère à la bande 1 la capacité de se déformer par traction longitudinale.

Les bandes de tissu bidimensionnel utilisées pour les segments 11 et 12 peuvent comprendre des fibres de carbone C, de kevlar, ou des fibres céramiques, par exemple en silice, en verre, en carbure de silicium SiC. Ces bandes de tissus peuvent en outre être imprégnées d'une résine réticulable, par exemple une résine époxy, ou une résine précurseur de matrice, par exemple précurseur de carbone C ou de carbure de silicium SiC.

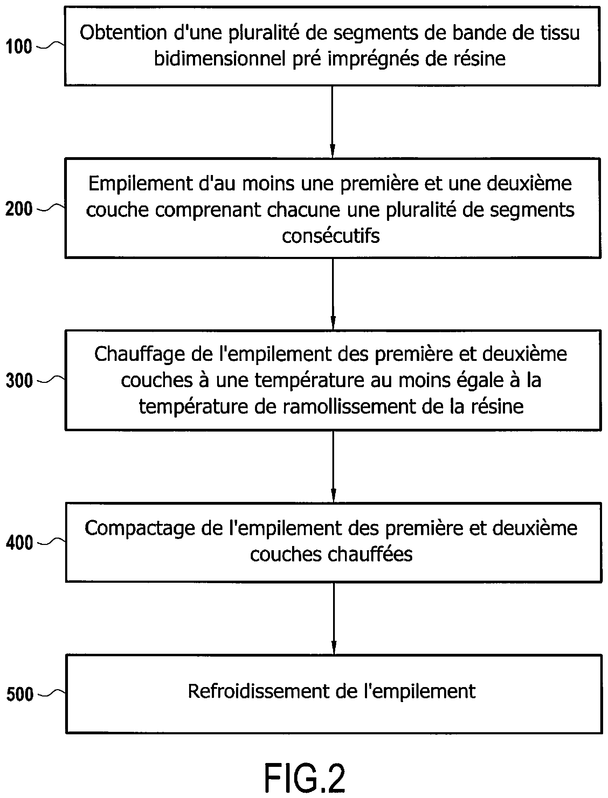

Un procédé de fabrication d'une bande 1 selon l'invention va maintenant être décrit en lien avec l'ordinogramme de la figure 2 et les figures 3 à 6.

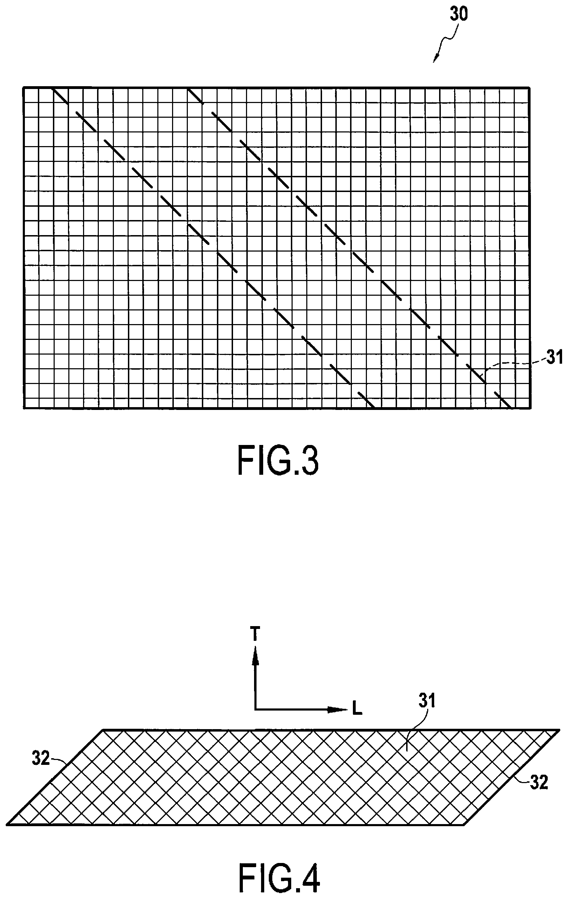

Une première étape 100 consiste à obtenir une pluralité de segments de bande de tissu bidimensionnel pré imprégnés de résine. Pour ce faire, on peut découper des segments 31 dans un pli de tissu pré imprégné 30. On pourra veiller, comme cela est représenté sur la figure 3, à orienter le segment 31 de façon à ce que ses groupes de fils soient orienté comme décrit précédemment. Dans l'exemple illustré, il est avantageux de découper des segments 31 qui présentent des bords transversaux 32 (figure 4) ayant une forme en biseau par rapport à la direction longitudinale L, notamment pour réduire la quantité de chutes de matériau pendant l'étape 100. Bien entendu, on peut découper des segments 11, 21 qui présentent une forme rectangulaire, comme décrit précédemment, ou d'autres formes.

Puis, dans une étape 200, on empile une première et une deuxième couche, chaque couche comprenant une pluralité de segments disposés consécutivement. On peut, durant cette étape, disposer d'abord les segments de la première couche, puis empiler les segments de la deuxième couche en veillant à les décaler le long de la bande pour que chaque segment d'une couche chevauche au moins deux bords transversaux adjacents de deux segments consécutifs de l'autre couche.

Dans une étape 300 on chauffe l'empilement réalisé à l'étape 200 à une température de ramollissement de la résine présente dans les segments. Puis, dans une étape 400 on va compacter l'empilement ainsi chauffé pour faire adhérer les couches empilées entre elles. La résine ramollie peut ainsi « coller » les deux couches entre elles. On notera que la température de ramollissement est une température à laquelle la résine se liquéfie légèrement sans polymériser. Dans l'étape 500 on refroidit l'empilement ainsi chauffé et compacté de façon à obtenir la bande multitouche cohérente. Les étapes 300 et 400 peuvent être réalisées simultanément ou consécutivement.

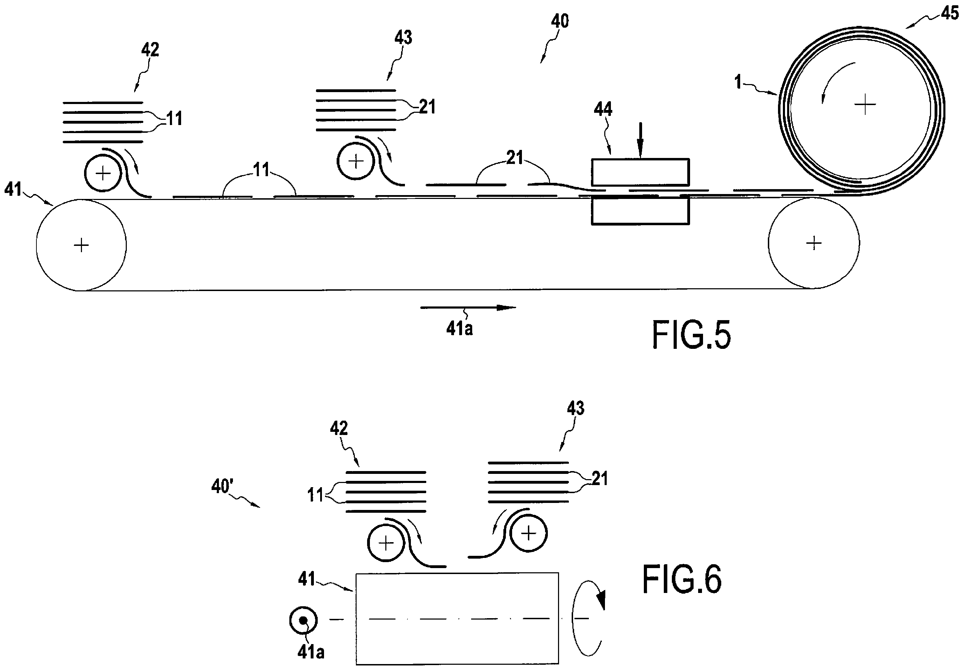

Une possibilité pour réaliser les étapes 200, 300 et 400 est d'utiliser un dispositif 40 tel que celui illustré sur la figure 5. Dans ce dispositif 40, les segments 11 de la première couche 10 sont déposés sur un convoyeur 41, par exemple un tapis roulant, à l'aide d'un premier dispositif de chargement 42. Le convoyeur 41 permet de faire avancer la bande en cours de fabrication dans la direction indiquée par la flèche 41a. Puis, un deuxième dispositif de chargement 43 décalé par rapport au premier dispositif de chargement 42 le long du convoyeur 41 permet d'empiler les segments 21 de la deuxième couche 20 sur les segments 11 de la première couche 10 déjà disposés sur le convoyeur 41. L'empilement des segments 11 et 21 est ensuite transporté par le convoyeur 41 vers une presse chauffante 44 qui va permettre de chauffer et compacter les segments 11 et 21 de façon simultanée. En sortie de la presse 44, la bande 1 multicouche ainsi formée est refroidie, à l'air libre, à l'aide d'un gaz réfrigéré ou encore d'un plateau réfrigéré, et peut être ensuite enroulée sur un rouleau 45 afin d'être stockée. D'autres moyens de chauffage sont utilisables, on citera par exemple le chauffage à air chaud, par résistances chauffantes, par rayonnement infrarouge, par chauffage à l'étuve, etc. On notera qu'en variante, la bande 1 ainsi fabriquée peut être utilisée directement pour fabriquer une pièce en matériau composite, par exemple dans un procédé de fabrication tel que celui qui sera décrit plus loin.

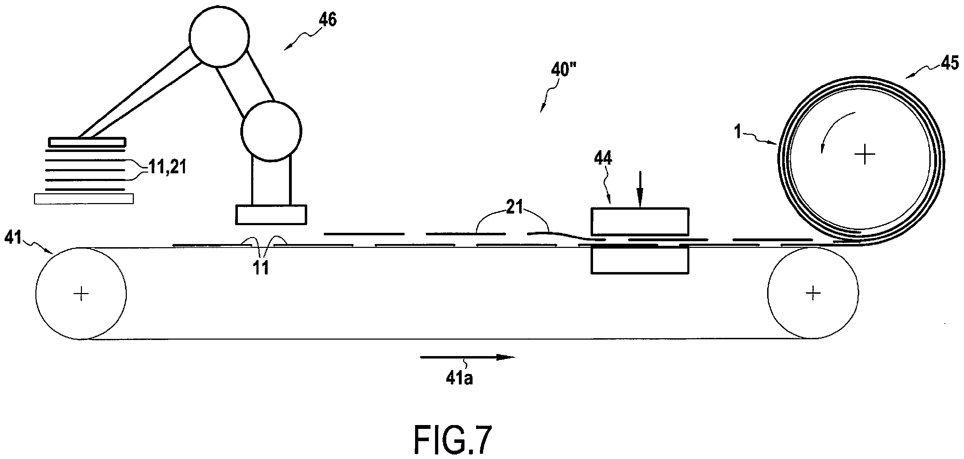

Dans une variante illustrée sur la figure 6, on peut utiliser un dispositif 40' dans lequel le premier 42 et le deuxième 43 dispositifs de chargement sont disposés sur les côtés du convoyeur 41, de part et d'autre de celui-ci. Dans encore une autre variante illustrée sur la figure 7, on peut utiliser un dispositif 40" dans lequel un robot 46 assure le positionnement des segments 11, 21 sur le convoyeur 41. Bien entendu, le positionnement des segments 11, 21 peut être réalisé manuellement. Enfin, dans une variante non illustrée, seul un unique dispositif de chargement est utilisé pour déposer les segments de la première et de la deuxième couche, le convoyeur effectuant des va et vient pour empiler les couches successivement.

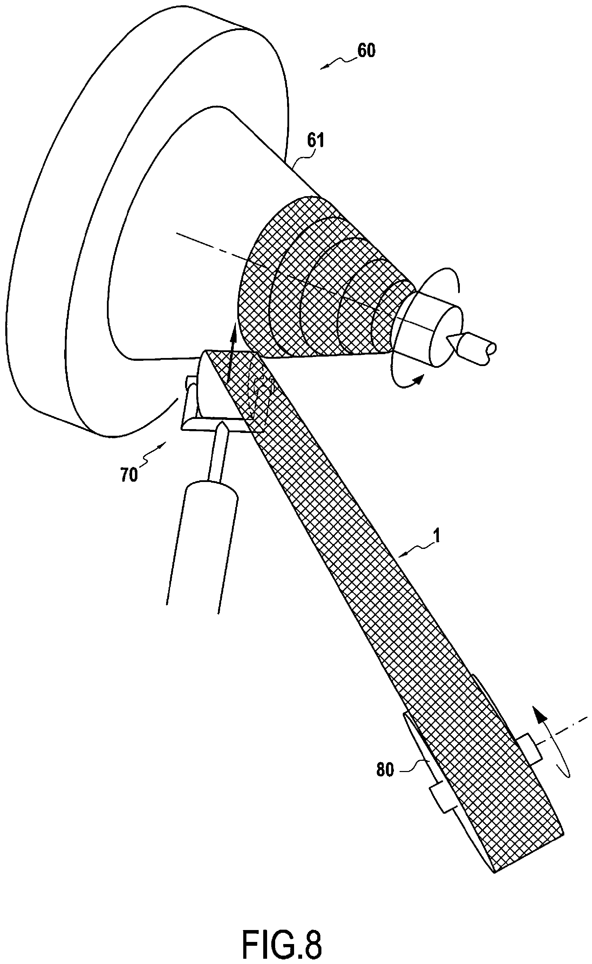

On va maintenant brièvement décrire en lien avec la figure 8 un procédé de fabrication d'une pièce en matériau composite présentant au moins en partie une forme de révolution, c'est-à-dire comportant au moins une portion formant un angle non nul avec l'axe de révolution de la pièce. Dans l'exemple illustré, cette pièce peut être un divergent de moteur-fusée.

La figure 8 montre un mandrin 60 présentant une surface 61 ici de forme tronconique sur laquelle on va bobiner une bande 1 selon l'invention, et un galet presseur 70 qui permet de guider la bande 1 au moment de son bobinage et de l'appuyer contre la surface 61 du mandrin 60. La bande 1 peut être stockée sur un rouleau 80. Des moyens de chauffage, non représentés, sont généralement présents au niveau du galet presseur 70 pour permettre à la bande 1 d'être plus déformable en ramollissant la résine. Des moyens de refroidissement, non représentés, peuvent également être présents pour, à l'inverse, « figer » la forme de la bande 1 une fois qu'elle a été bobinée sur la surface 61 du mandrin 60. L'opérateur peut ainsi, au début du procédé de fabrication, coincer la bande entre le galet presseur 70 et le mandrin 60. Puis, au cours du bobinage, l'opérateur n'a plus besoin d'alimenter le dispositif en segments puisque la bande 1 est continue. L'opérateur peut ainsi se concentrer sur la déformation à imposer à la bande 1 par traction au moment de son bobinage pour lui donner une forme adaptée à la courbure de la surface 61, ainsi qu'au guidage de ladite bande 1 tout au long du bobinage. La sécurité de l'opérateur est améliorée puisqu'il n'a plus besoin de s'approcher du galet presseur 70 pour alimenter le dispositif en segments. La bande multicouche 1 selon l'invention peut également permettre d'automatiser l'opération de bobinage, puisque l'alimentation en bande 1 peut être effectuée de façon continue.

Une fois la bande 1 bobinée, on obtient une ébauche de pièce dont la fabrication peut être finalisée par cuisson afin de former la matrice.

Dans tout l'exposé, la bande multicouche selon l'invention a été décrite avec deux couches. Bien entendu, l'invention s'applique à une bande multicouche qui peut comprendre plus de deux couches, par exemple trois ou quatre couches. On pourra veiller à ce que le nombre de couches dans la bande soit suffisant pour réduire la durée du procédé de fabrication, sans altérer outre mesure la déformabilité de la bande.

## Revendications

1. Bande multicouche (1) destinée à être utilisée pour fabriquer une pièce en matériau composite, la bande multicouche comprenant une pluralité de segments (11, 21) de bande de tissu bidimensionnel imprégnés de résine, chaque segment comprenant deux pluralités de fils (13, 14) s'étendant perpendiculairement l'une par rapport à l'autre, les fils de chaque pluralité de fils s'étendant dans une direction faisant un angle (α, β) non nul avec une direction longitudinale (L) de chaque segment,
la bande multicouche étant formée d'un empilement d'au moins une première (10) et une deuxième (20) couches, chaque couche comprenant une pluralité de segments (11, 21) consécutifs dont les bords transversaux (12, 22) sont adjacents les uns avec les autres, chaque segment d'une couche chevauchant au moins deux bords transversaux adjacents de deux segments consécutifs de l'autre couche.

2. Bande multicouche selon la revendication 1, dans laquelle les fils de chaque pluralité de fils (13, 14) s'étendent dans une direction faisant un angle (α, β) de 45° avec la direction longitudinale (L) de chaque segment.

3. Bande multicouche selon la revendication 1 ou 2, dans laquelle chaque bord transversal (32) d'un segment (31) présente une forme en biseau par rapport à la direction longitudinale (L).

4. Procédé de fabrication d'une bande multicouche (1) destinée à être utilisée pour fabriquer une pièce en matériau composite, le procédé comprenant les étapes suivantes :
- l'obtention (100) d'une pluralité de segments (11, 21) de bande de tissu bidimensionnel imprégnés de résine, chaque segment comprenant deux pluralités de fils (13, 14) s'étendant perpendiculairement l'une par rapport à l'autre, les fils de chaque pluralité de fils s'étendant dans une direction faisant un angle (α, β) non nul avec une direction longitudinale (L) de chaque segment,
- l'empilement (200) d'au moins une première (10) et une deuxième (20) couches, chaque couche comprenant une pluralité de segments (11, 21) consécutifs dont les bords transversaux (12, 22) sont adjacents les uns avec les autres, chaque segment d'une couche chevauchant au moins deux bords transversaux adjacents de deux segments consécutifs de l'autre couche,
- le chauffage (300) de l'empilement des première (10) et deuxième couches (20) à une température au moins égale à la température de ramollissement de la résine présente dans les segments,
- le compactage (400) de l'empilement des première et deuxième couches chauffées de manière à les faire adhérer l'une avec l'autre, et
- le refroidissement (500) de l'empilement ainsi obtenu de manière à obtenir la bande multicouche (1) cohérente.

5. Procédé selon la revendication 4, dans lequel les étapes de chauffage et de compactage de l'empilement sont réalisées simultanément dans une presse chauffante (44).

6. Procédé selon l'une quelconque des revendications 4 et 5, comprenant en outre après l'étape de refroidissement de l'empilement, une étape durant laquelle on enroule la bande multicouche (1) sur un rouleau (45) afin de la stocker.

7. Procédé selon l'une quelconque des revendications 4 à 6, dans lequel les segments (11) de la première couche (10) sont déposés sur un convoyeur (41) par un premier dispositif de chargement (42), et les segments (12) de la deuxième couche (20) sont empilés sur ceux de la première couche (10) par un deuxième dispositif de chargement (43) décalé par rapport au premier dispositif de chargement le long du convoyeur (41).

8. Procédé selon l'une quelconque des revendications 4 à 6, dans lequel un segment (31) de bande de tissu bidimensionnel imprégné de résine est obtenu par découpage d'un pli de pré imprégné (30).

9. Procédé de fabrication d'une pièce en matériau composite présentant une forme de révolution comportant au moins une portion formant un angle non nul avec l'axe de révolution de la pièce, le procédé comprenant au moins une étape de bobinage d'une bande multicouche (1) selon l'une quelconque des revendications 1 à 3 sur une surface (61) ayant la forme de la pièce à fabriquer.

10. Procédé selon la revendication 9, dans lequel on fabrique une pièce de moteur-fusée.

## Patentansprüche

1. Mehrschichtband (1), das zur Verwendung für die Herstellung eines Teils aus Verbundmaterial bestimmt ist, wobei das Mehrschichtband eine Vielzahl von Segmenten (11, 21) eines zweidimensionalen Gewebebands umfasst, die mit Harz imprägniert sind, wobei jedes Segment zwei Vielzahlen von Fäden (13, 14) umfasst, die sich in Bezug aufeinander senkrecht erstrecken, wobei sich die Fäden von jeder Vielzahl von Fäden in eine Richtung erstrecken, die mit einer Längsrichtung (L) von jedem Segment einen Winkel (α, β) ungleich null bildet,
wobei das Mehrschichtband aus einem Stapel von mindestens einer ersten (10) und einer zweiten Schicht (20) gebildet wird, wobei jede Schicht eine Vielzahl von aufeinanderfolgenden Segmenten (11, 21) umfasst, deren Querkanten (12, 22) zueinander benachbart sind, wobei jedes Segment einer Schicht mindestens zwei benachbarte Querkanten von zwei aufeinanderfolgenden Segmenten der anderen Schicht überlappt.

2. Mehrschichtband nach Anspruch 1, wobei sich die Fäden von jeder Vielzahl von Fäden (13, 14) in eine Richtung erstrecken, die mit der Längsrichtung (L) von jedem Segment einen Winkel (α, β) von 45° bildet.

3. Mehrschichtband nach Anspruch 1 oder 2, wobei jede Querkante (32) eines Segments (31) in Bezug auf die Längsrichtung (L) eine abgeschrägte Form aufweist.

4. Herstellungsverfahren eines Mehrschichtbands (1), das zur Verwendung für die Herstellung eines Teils aus Verbundmaterial bestimmt ist, wobei das Verfahren die folgenden Schritte umfasst:
- Erhalten (100) einer Vielzahl von Segmenten (11, 21) eines zweidimensionalen Gewebebands, die mit Harz imprägniert sind, wobei jedes Segment zwei Vielzahlen von Fäden (13, 14) umfasst, die sich in Bezug aufeinander senkrecht erstrecken, wobei sich die Fäden von jeder Vielzahl von Fäden in eine Richtung erstrecken, die mit einer Längsrichtung (L) von jedem Segment einen Winkel (α, β) ungleich null bildet,
- Stapeln (200) von mindestens einer ersten (10) und einer zweiten Schicht (20), wobei jede Schicht eine Vielzahl von aufeinanderfolgenden Segmenten (11, 21) umfasst, deren Querkanten (12, 22) zueinander benachbart sind, wobei jedes Segment einer Schicht mindestens zwei benachbarte Querkanten von zwei aufeinanderfolgenden Segmenten der anderen Schicht überlappt,
- Erwärmen (300) des Stapels der ersten (10) und zweiten Schicht (20) auf eine Temperatur, die zumindest gleich der Erweichungstemperatur des in den Segmenten vorliegenden Harzes ist,
- Verdichten (400) des Stapels der erwärmten ersten und zweiten Schicht, damit sie aneinanderhaften, und
- Abkühlen (500) des auf diese Weise erhaltenen Stapels, um das zusammenhängende Mehrschichtband (1) zu erhalten.

5. Verfahren nach Anspruch 4, wobei die Schritte des Erwärmens und Verdichtens des Stapels gleichzeitig in einer Heizpresse (44) umgesetzt werden.

6. Verfahren nach einem der Ansprüche 4 und 5, ferner umfassend nach dem Schritt des Abkühlens des Stapels einen Schritt, in dem das Mehrschichtband (1) auf eine Rolle (45) gewickelt wird, um es einzulagern.

7. Verfahren nach einem der Ansprüche 4 bis 6, wobei die Segmente (11) der ersten Schicht (10) durch eine erste Ladevorrichtung (42) auf einem Förderband (41) abgelegt werden, und die Segmente (12) der zweiten Schicht (20) durch eine zweite Ladevorrichtung (43), die in Bezug auf die erste Ladevorrichtung entlang des Förderbands (41) versetzt ist, auf die der ersten Schicht (10) gestapelt werden.

8. Verfahren nach einem der Ansprüche 4 bis 6, wobei ein Segment (31) des zweidimensionalen Gewebebands, das mit Harz imprägniert ist, durch das Zerschneiden eines Falzes eines Prepregs (30) erhalten wird.

9. Herstellungsverfahren eines Teils aus Verbundmaterial, das eine Form einer Drehung aufweist, umfassend mindestens einen Abschnitt, der einen Winkel ungleich null mit der Drehachse des Teils bildet, wobei das Verfahren mindestens einen Schritt des Aufwickelns eines Mehrschichtbands (1) nach einem der Ansprüche 1 bis 3 auf einer Fläche (61) umfasst, welche die Form des herzustellenden Teils aufweist.

10. Verfahren nach Anspruch 9, wobei ein Teil eines Raketentriebwerks hergestellt wird.

## Claims

1. A multilayered strip (1) intended to be used for producing a component in composite material, the multilayered strip comprising a plurality of segments (11, 21) of a bi-dimensional fabric strip impregnated with resin, each segment comprising two pluralities of threads (13, 14) extending perpendicularly with respect to one another, the threads of each plurality of threads extending in a direction making a non-null angle (α, β) with a longitudinal direction (L) of each segment,
the multilayered strip being formed by a stacking of at least a first (10) and a second (20) layer, each layer comprising a plurality of consecutive segments (11, 21), of which the transversal edges (12, 22) are adjacent to each other, each segment of a layer overlapping at least two adjacent transversal edges of two consecutive segments of the other layer.

2. The multilayered strip according to claim 1, wherein the threads of each plurality of threads (13, 14) extend in a direction making a 45° angle (α, β) with the longitudinal direction (L) of each segment.

3. The multilayered strip according to claim 1 or 2, wherein each transversal edge (32) of a segment (31) exhibits a beveled shape with respect to the longitudinal direction (L).

4. A method for producing a multilayered strip (1) intended to be used for producing a component in composite material, the method comprising the following steps:
- obtaining (100) a plurality of segments (11, 21) of a bi-dimensional fabric strip impregnated with resin, each segment comprising two pluralities of threads (13, 14) extending perpendicularly with respect to one another, the threads of each plurality of threads extending in a direction making a non-null angle (α, β) with a longitudinal direction (L) of each segment,
- stacking (200) of at least a first (10) and a second (20) layer, each layer comprising a plurality of consecutive segments (11, 21) of which the transversal edges (12, 22) are adjacent to each other, each segment of a layer overlapping at least two adjacent transversal edges of two consecutive segments of the other layer,
- heating (300) the stacking of the first (10) and second (20) layers at a temperature at least equal to the softening temperature of the resin present in the segments,
- compacting (400) the stacking of the first and second layers heated in a way such as to make them stick to each other, and
- cooling (500) the thus obtained stacking such as to obtain the coherent multilayered strip (1).

5. The method according to claim 4, wherein the heating and compacting steps of the stacking are performed simultaneously in a heating press (44).

6. The method according to any one of claims 4 and 5, further comprising, after the stacking cooling step, a step during which the multilayered strip (1) is wound onto a reel (45) for storage.

7. The method according to any one of claims 4 to 6, wherein the segments (11) of the first layer (10) are placed onto a conveyor (41) by a first loading device (42), and the segments (12) of the second layer (20) are stacked on those of the first layer (10) by a second loading device (43) shifted with respect to the first loading device along the conveyor (41).

8. The method according to any one of claims 4 to 6, wherein a segment (31) of a bi-dimensional fabric strip impregnated with resin is obtained by cutting a fold of pre-impregnated fabric (30).

9. A method for producing a component in composite material exhibiting a revolution form including at least a portion forming a non-null angle with the axis of revolution of the component, the method comprising at least a step of coiling a multilayered strip (1) according to any one of claims 1 to 3 on a surface (61) having the form of the component to be produced.

10. The method according to claim 9, wherein a rocket engine component is produced.
